Europäisches Patentamt

European Patent Office

Office européen des brevets

(11) Publication number: **0 470 056 A2**

# EUROPEAN PATENT APPLICATION

(21) Application number: **91830325.6**

(51) Int. Cl.5: **B60R 16/02**

(22) Date of filing: **23.07.91**

(30) Priority: **30.07.90 IT 6760690**

(43) Date of publication of application:
**05.02.92 Bulletin 92/06**

(84) Designated Contracting States:
**AT BE CH DE DK ES FR GB GR IT LI LU NL SE**

(71) Applicant: **MARELLI AUTRONICA S.p.A.**
**Via Griziotti 4**
**I-20145 Milano(IT)**

(72) Inventor: **Ferrari, Roberto**
**Via Papa Giovanni XXIII 2**
**I-20057 Vedano al Lambro (Milano)(IT)**
Inventor: **Lanati, Antonella**
**Via Regina Adelaide**

**I-27020 Massana di Torre d'Isola (Pavia)(IT)**
Inventor: **Nesci, Walter**
**Via Romilli 24**
**I-20139 Milano(IT)**
Inventor: **Valacca, Enrico**
**Via Moruzzi 23**
**I-27100 Pavia(IT)**
Inventor: **Librino, Renato**
**Via Marconi 7**
**I-10043 Orbassano (Torino)(IT)**

(74) Representative: **Bosotti, Luciano et al**
**c/o Jacobacci-Casetta & Perani S.p.A. Via**
**Alfieri, 17**
**I-10121 Torino(IT)**

(54) **A system for transmitting signals, particularly in motor vehicles, and a method for its operation.**

(57) A system for transmitting signals, particularly between command-signals generating devices, sensor devices and actuator devices fitted in motor vehicles (A), includes:
- a plurality of peripheral interface units (5, 6) each associated with at least one device,
- a main unit (2) which can converse with the peripheral units (5, 6), and
- communication lines (3) which branch out from the central unit (2) towards the peripheral units (5, 6).

The peripheral units (5, 6) are connected to the communication lines (3) in a generally interchangeable manner.

FIG. 1

The present invention relates to signal-transmission systems and has been developed with particular attention to its possible use for transmitting signals in motor vehicles.

In the motor industry, the increase in the number of functions needed and in their level of sophistication, results in an increase in the size and complexity of the vehicle's electrical system. As a direct result, there is an increase in the number of connections, the weight, the volume, and the material and assembly costs, as well as a greater chance of connection errors at the assembly stage. There may also be a certain loss of reliability because of the increased numbers of connections and because the system has a larger number of different sections. A certain amount of difficulty may also be encountered in supporting the growing number of functions required if one wishes to continue to use conventional wiring, that is wiring in which each control member (for example, each push-button, switch, etc.) is connected directly to the corresponding actuator (for example, a motor for a window-winder, etc.) by power lines.

For this reason, it has already been proposed (see, for example, United States patent 4,697,094) to provide systems for connecting sensors to actuators in which the complexity of the wiring is considerably reduced by the connection of several sensors and several actuators in a combined manner with the use of common cables (so-called multiplex systems).

Whilst some known solutions achieve considerable simplification in comparison with conventional wiring, they still suffer from having too many connections; for example, the solution of the United States patent mentioned above provides for the use of a connecting cable with at least five wires (which in a typical automotive context, may become seven) for connecting the various devices, and this neither simplifies nor optimises the system.

The object of the present invention is to provide a system and a method of organising the system which respond very well to the requirements expressed above, that is, the need, on the one hand to provide for an ever increasing number of functions in a motor vehicle, and on the other hand to simplify the structure of the wiring of the system.

According to the present invention, this object is achieved by means of a system and a method having the specific characteristics recited in the following claims.

The invention will now be described, purely by way of non-limiting example with reference to the appended drawings, in which:

Figure 1 shows, in the form of a block diagram, a possible topological configuration of a system according to the invention,

Figure 2 shows the architecture of the system of Figure 1 even more schematically for clarity of illustration,

Figures 3 and 4 show two different protocols used for the transmission of messages within a system according to the invention, and

Figures 5, 6 and 7 show a possible configuration for some of the elements of the system of Figures 1 and 2, again in the form of a block diagram.

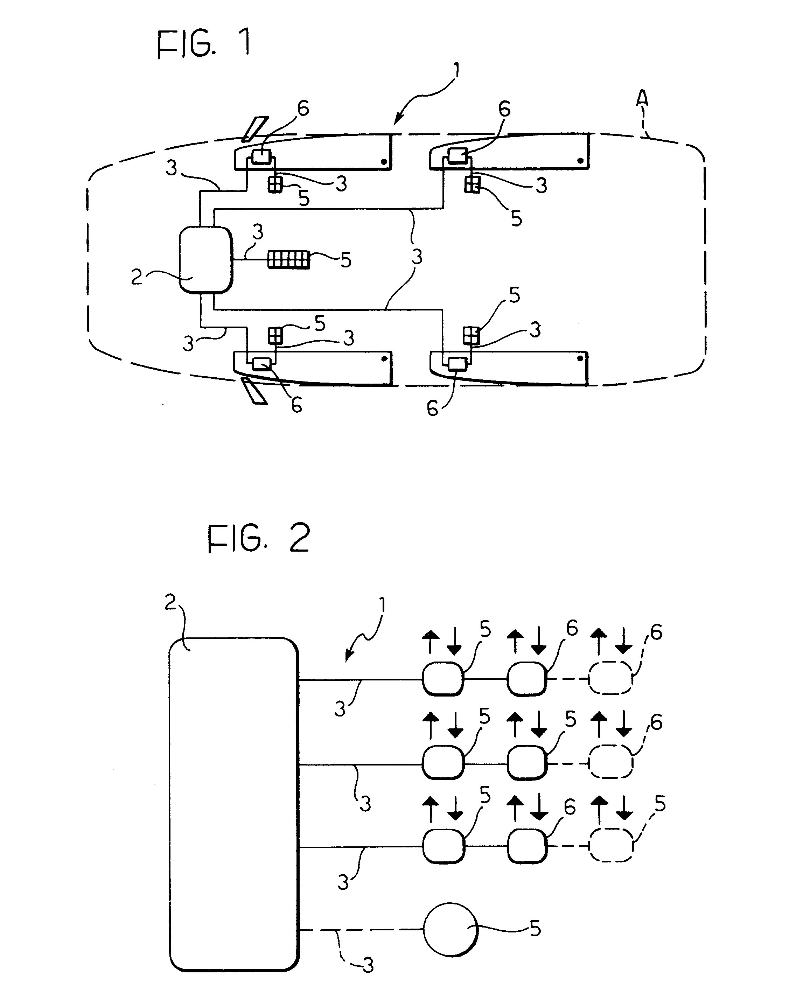

As indicated above, Figure 1 shows schematically the structure of a system 1 for transmitting signals in a motor vehicle A. This may, for example, be a luxury motor car.

In general, the system is composed of a main (master) unit 2 which is connected by cables to various peripheral interface (slave) units 5, 6 associated with devices for generating command signals, with sensors and with actuators in general.

The cables 3 branch out from the main unit 2 in a generally star-like arrangement and may be connected to any number of peripheral units 5, 6.

The diagram of Figure 1 shows, by way of example, five cables 3, of which one is connected to a peripheral unit 5, whilst each of the other four is connected to two peripheral units associated with the vehicle doors; more precisely, these are a peripheral unit 5 associated with a sensor or control member (for example, the push-button panel on the armrest of a respective vehicle door, for operating the window-winders of one or more doors of the vehicle) and a unit 6 which is associated with the actuator for locking/unlocking the lock of a respective vehicle door, with the window-winder of the door and, possibly, with a device for orientation of an external rear-view mirror.

Within the unit 1, it is to be arranged, for example, that when a unit 6 is activated (for example, by inserting the key in the lock) the corresponding lock (and also the other locks, in the case of a centralised control function) are unlocked or locked by the respective actuators.

In general (that is, preferably but not necessarily) each cable 3 may be constituted substantially by a communication wire and the respective earth wire together with a supply wire (12 volts) and its earth wire (four wires in all).

Alternatively, if the power does need to be earthed, the cable may be constituted by only three wires (communication, signal earth and supply).

Naturally, the wiring diagram shown in Figure 1 which is deliberately simplified for clarity of illustration, constitutes only one possible example of the application of the invention; in fact the invention may be applied to systems including any number of peripheral units 5, 6, connected to a correspondingly variable number of lines 3 largely regardless of the nature of the elements which constitute the sensors/control members or the actuators.

For this purpose, Figure 2 is a generalised block diagram of the architecture of the system of Figure 1.

The main characteristic of this architecture is that it is of the master/slave type. In such a system, the intrinsic complexity of the system is concentrated in a single control unit, the master unit 2, which supervises communications from and to the peripheral units 5, 6 in order to carry out the required functions. The peripheral units 5, 6 act as interfaces between the command transmitting devices (for example, push-buttons) and the actuators (for example, electric motors).

A "token passing" protocol may be used for transmitting the signals within the system 1, which has a generally star-like configuration (which at least at the local level, may be integrated with and/or replaced by a different structure, for example an open or closed loop structure).

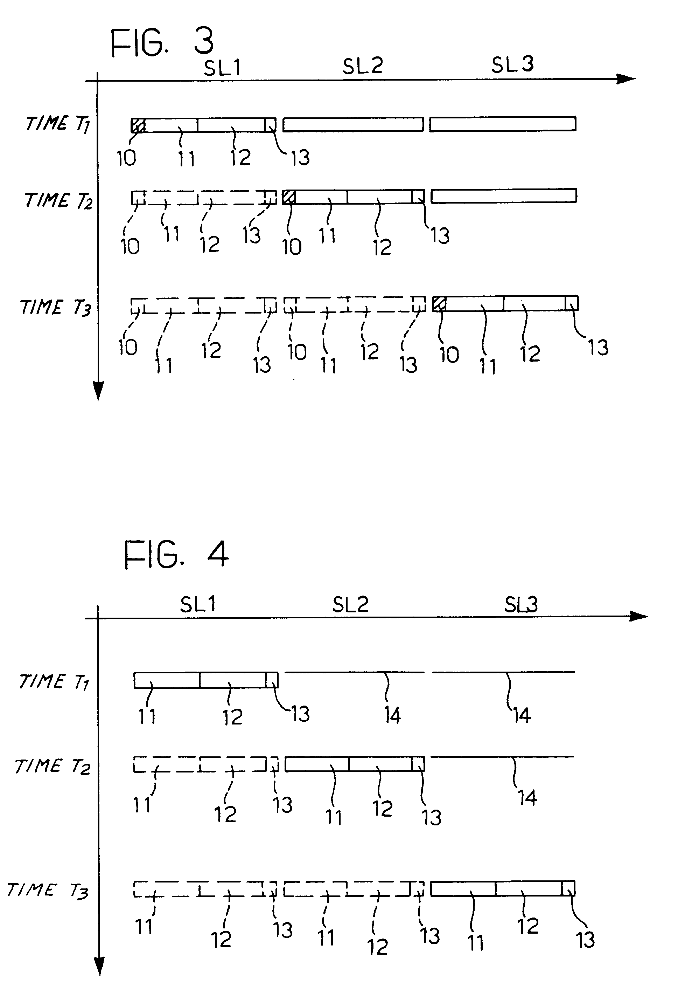

The main (master) unit supervises the communications by simultaneously interrogating one peripheral (slave) unit 5, 6 on each line. Each peripheral unit 5, 6 is authorised to exchange data with the main unit 2 only after it has received therefrom an enabling signal represented by a symbol or "token" (indicated 10 in the schematic representations of Figure 3, which will be referred to further below).

Once it has been enabled, the peripheral unit 5, 6 involved at the time in question expresses its state in the form of a string of bits (indicated 11 in Figures 3 and 4) which convey messages, for example, of a diagnostic character relating to the operating conditions of an actuator, or, in the case of a peripheral unit which acts as an interface with a device for emitting command signals (for example, a push-button), messages which express a function to be activated. It then receives the necessary command, or possibly another message from the main unit 2 (the string of bits indicated 12 in Figures 3 and 4).

One or more error-checking parity bits are then exchanged between the main unit 2 and the peripheral units 5 and 6 (from the central unit 2 to the peripheral unit 5, 6) and finally, an "acknowledgment" message (ACK) is transmitted from the peripheral units 5, 6 to the central unit 2 to confirm the correct receipt of the message.

The transmission of the parity bit and the acknowledgment message is indicated generally by the reference numeral 13 in the diagrams of Figures 3 and 4.

With reference to the topology of the network, the main unit 2 communicates simultaneously with all the branches (the lines 3) and interrogates peripheral units 5, 6 on the same branch in sequence.

When a peripheral unit (slave) 5, 6 receives a "token" symbol (at the time T1 in Figure 3), it begins to communicate with the main unit 2 and allows only the synchronising signal, which is transmitted to the network by the main unit 2 and identifies the communication frequency, to pass on to the peripheral units 5, 6 further downstream. Upon completion of the exchange of the data, the parity bit, and the acknowledgement message 13, the peripheral unit 5, 6 involved at the time in question becomes transmissive, so to speak, as indicated by the broken outlines in the diagram of Figure 3 on the line relating to the time T2.

In these circumstances, the unit 5, 6 allows the next token emitted by the central unit 2 (at the time T2 of Figure 3) to pass to the next peripheral unit 5, 6 downstream in the network. At this point, the downstream unit is enabled; an exchange of data therefore takes place between that unit and the central unit 2 in the manner described above.

Upon completion of the exchange of data with the central unit, the peripheral unit in question also becomes transmissive, enabling the token to pass to any additional peripheral units 5, 6 further downstream in the branch.

This is indicated schematically on the line of Figure 3 which relates to the time Tn, where the frames passing through already transmissive peripheral units before arriving at a unit still to be interrogated in order to exchange data with the central unit 2, are shown in broken outline. The mechanism described above for a generic branch is used for simultaneous communication with all the branches (lines 3) of the system 1.

Once the main unit 2 has interrogated all the peripheral units 5, 6, it remains silent and disconnects itself from the network for a certain time interval.

The duration of this interval is selected so that the peripheral units 5, 6 can detect that it is much longer than any other possible interval in communications, so that the units can reset their internal parameters in relation to the organisation of communications with the unit 2 and prepare for a new interrogation cycle.

By way of reference (in relation to a typical application in the automotive sector) communications in the network may be organised in such a way that messages or frames (10 to 13) each including about thirty bits are transmitted in the network at a frequency of the order of 2 Kbits/sec. In practice, this means that the communication between the central unit 2 and each of the peripheral units 5, 6 lasts for about 16 milliseconds, with an overall interrogation (polling) cycle of the peripheral units (5,6) of the order of 35 milliseconds.

With reference to these parameters (which, naturally, are purely examples) the selected duration of the interval during which the central unit 2 is disconnected from the network may be 1-10 milliseconds.

The system described above has many advantages resulting from its structure and implementation.

In the first place, as will become clearer from the following, it enables the structure of the peripheral units 5, 6 to be simplified, resulting in lower costs and greater reliability.

The peripheral units do not have to be identified by specific addresses, and all peripheral units for performing the same kind of function are therefore interchangeable.

This characteristic, which allows the number of different replacement parts to be minimised, has been expressed in the claims which follow as the fact that the peripheral units 5, 6 of the system according to the invention can be arranged in a "generally interchangeable" manner.

Naturally, regarding the ability of the main unit 2 to organise the command signals, priority mechanisms may be provided (at the software level, according to known criteria which do not need to be described herein) to give precedence in time, or at any rate a hierarchy of command messages from certain devices.

For example, in the case of an actuator constituted by the window-winder operating device of one of the doors of the vehicle, the system 1 may be arranged so that the movement of the window-winder can be controlled equally well by the operation of at least two different push-buttons. However, the unit 2 can be programmed so that, in the event of conflicting commands, it gives priority to the command from a particular push-button, for example, the one associated with the driving position.

The diagram of Figure 4 shows a further development of the transmission protocol described above with reference to Figure 3.

In this variant of the invention, the "token" signal has been eliminated by the incorporation of a timer in each peripheral unit 5, 6 (as will become clearer from the following).

The operating principle described above, according to which each peripheral unit 5, 6 becomes transmissive to communications after it has exchanged data with the main unit 2, can thus be retained and the peripheral units 5, 6 can be kept normally deactivated; this is indicated by the continuous lines 14 which appear in Figure 4.

Each peripheral unit 5, 6 is activated and ready to exchange data with the main unit 2 when, and only when it detects the arrival of a message (a frame - in this case constituted only by the frames 11 to 13) on its communication line. This only occurs, in fact, when the peripheral units further upstream have already exchanged data with the main unit 2 and have thus become transmissive to communications.

In these conditions, it is certain that an incoming message arriving at a peripheral unit 5, 6 is intended for that unit 5, 6 and not for another one.

Upon completion of the data exchange with the main unit 2 according to the criteria described above in connection with Figure 3, the peripheral unit in question 5, 6 itself becomes transmissive so that subsequent messages emitted by the main unit 2 pass on to peripheral units 5, 6 further downstream. This mechanism, like that of Figure 3, has also been represented by the indication of messages passing through peripheral units 5, 6 which have become transmissive by broken outlines on the lines of the diagrams of Figure 4 which relate to the times T2 and Tn.

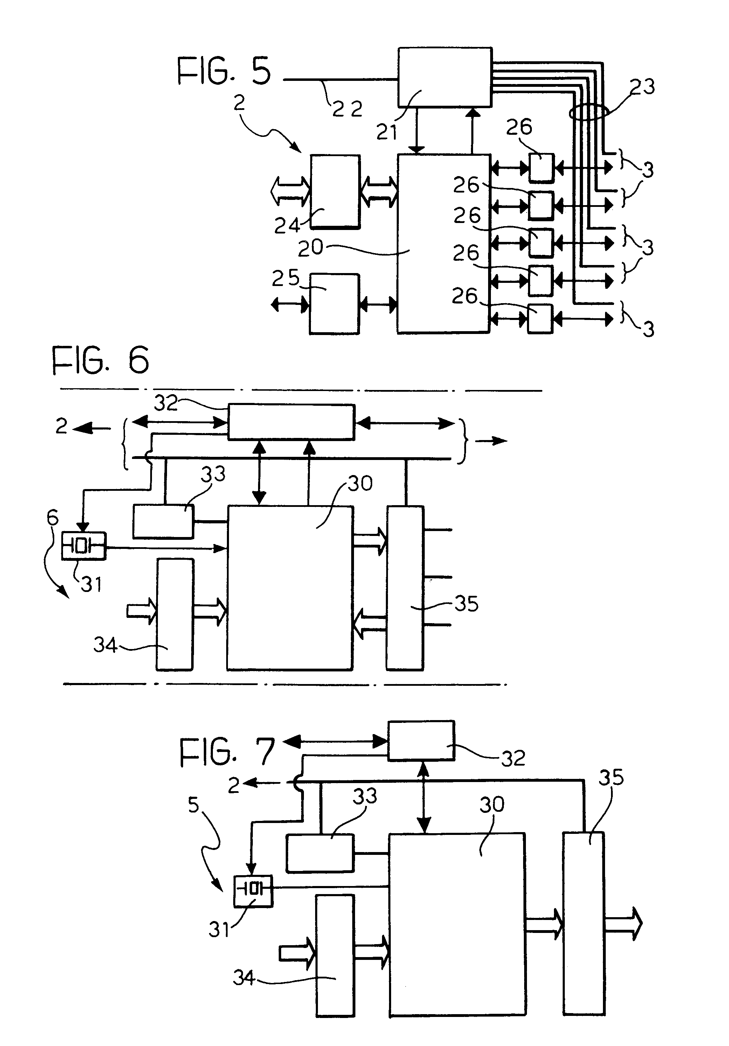

Figure 5 shows the internal structure of the main unit 2 in greater detail.

The core of the unit in question is formed by a processor constituted, for example, by an 8-bit microcontroller operating at 8.2 MHz and having 38 input and output lines (8 of which may be configured as analog/digital conversion inputs) with five ports.

The input and output lines of the microcontroller 20 have interfaces for communication with the other elements which form parts of the unit 2.

More precisely, these are:
- a unit 21 for supervising the supply, connected to the electrical system of the motor vehicle by a line 22 and having outputs connected to supply lines 23 (usually 12 volt) which are intended to be joined to the cables 3,
- a further interface 24 which regulates communications with a key pad or push-button panel for the input of commands by the motorist, possibly by remote control, and
- a further interface 25 for enabling connection (according to known principles) to an external diagnostic member, for example, to enable the outward transmission of messages stored in the microcontroller 20 and indicative of the faulty operation or failure of one or more of the peripheral units 5, 6 or the members associated therewith.

In general, the lines 3 are controlled in parallel by the microcontroller 20, preferably with the use of an "Output Compare" function which, in a microcontroller of the type specified above, is provided for by respective interface circuits 26.

As regards the communication exchange with the peripheral units 5, 6 in particular, the organisaton of the main unit is controlled at the software level in the manner described above. This is achieved according to criteria which are known to experts in the art and do not need to be described in detail herein.

In particular, the microcontroller 20 of the type described by way of example above can be disposed at the software level in a particular state (stopped), in which its oscillator is stopped and its consumption is limited to about one hundredth of a microampere. This characteristic can usefully be applied to control the activation and deactivation of the entire system 1. These two functions are achieved by virtue of the provision of the circuit 21 which distributes the supply to the peripheral units.

In particular, the level of the supply voltage (the battery voltage) is monitored continuously by the main unit 2. This unit detects the voltage which is converted into digital form and compared with a threshold or a window of acceptable values, the system 1 being deactivated when the voltage is outside the acceptable range.

The fact that the system can temporarily be deactivated (by the stop function described above) helps to make the consumption of electrical energy by the system particularly low. In any case, the application of certain commands to the system (for example, the command to open one or more doors, given by the insertion of the key in one of the locks or by a remote control) can be arranged to reactivate the whole system to enable it to operate.

Naturally, all the inputs and outputs of the main unit 2 have additional circuits (of known type, not shown) located within the various interface modules for protection against short-circuits to earth or to the battery voltage. Protection is also provided against electrical interference (so-called load dump, etc.) and against the reversal of the battery.

Figures 6 and 7 show schematically, again in the form of a block diagram, two possible embodiments of the architecture of the interface units 5, 6.

More precisely, these are interfaces for association with power actuators (Figure 6) such as and for example, the window-winder motors, the locks, etc. and interfaces for connection to low-power modules (Figure 7), for example, push-button panels.

According to a layout generally similar to that of the main unit 2 of Figure 5, the core of each peripheral unit 5, 6 is constituted by a microcontroller 30, usually of lower capacity than the microcontroller 20 of the main unit 2.

The microcontroller 30, may be a four-bit device operating at 4,194 MHz with nine 4-bit input-output ports, at least one A/D converter, one or two counters with 12-bit timing functions, a timer with a watchdog function, a serial interface and six interrupt levels.

One of the timers in question is clearly indicated 31.

This timer enables the system to operate in the mannner described above with reference to Figure 4 (the elimination of the token from the transmission protocol).

In fact, the controller 30 is sensitive to the arrival of a message or frame at the interface 32, which controls communications with the main unit 2, the message or frame having passed through the peripheral units 5, 6 further upstream which have become transmissive as a result of the switching of their interfaces 32 upon completion of the exchange of data with the main unit 2. As a result of the arrival of the message, the microcontroller 30 starts to control communications, operating at a rate controlled by the timer 31.

Like the main unit 2, each peripheral unit 5, 6 also includes a supply regulator unit 33 connected to the 12-volt power supply line. This line preferably comes direct from the main unit 2 (see also Figure 5) and is consequently deactivated when the system is not operating. This makes it unnecessary to use circuits in the individual peripheral units 5, 6 for reducing power consumption or for protection against load dump and similar phenomena.

As can readily be appreciated from a comparison of Figures 6 and 7, the peripheral unit shown by way of example in Figure 6 has been arranged so that it can be interposed in one of the branches of the star-like structure of the system. In other words, the peripheral unit illustrated is interposed between the main unit 2 and other peripheral units 5, 6 situated downstream in the branch, possibly with other peripheral units situated upstream.

The peripheral unit 5 of Figure 7, however, is arranged - by way of example - as the unit which is furthest downstream in its respective branch. Naturally, the configurations described are fully interchangeable by virtue of the fact that the peripheral units 5, 6 characteristic of the system according to the invention can be connected in a generally interchangeable manner.

Moreover, in general, the microcontroller 30 of each peripheral unit 5, 6 is associated with at least one interface 34 for connection to command generating devices (for example sensors, key pads or push-button panels) and at least one interface 35 for controlling the actuators connected to the peripheral unit. In the case of power peripheral units, the interface 35 will include electronic circuits which can supply the power necessary to actuate the actuators, for example, the motors for operating the window-winder of a respective door of the vehicle, or the actuator for unlocking/locking a lock.

Moreover, the interface 35 may be configured so as to collect diagnostic data relating to the operation of the associated elements for transmission to the main unit 2.

Naturally, the circuit configuration described may be varied in many ways in dependence on the specific requirements of use.

Thus, for example, a peripheral unit 5, 6 which is intended to act exclusively as an interface for operating an actuator may not have an interface 34. Similarly, another peripheral unit which is intended to cooperate exclusively with a sensor or a command generating device (for example, a push-button panel) may not have an actuator interface 35.

Furthermore, the interfaces 34 and 35 in a peripheral unit 5, 6 may be connected in a feedback arrangement. In this case, the interface 34 receives from a sensor associated with the device operated by an actuator connected to the interface 35, a signal indicative of the actual position of the member controlled by the actuator and can thus supply the microcontroller 30 with a feedback signal to be used for controlling the actuator. This configuration may be adopted, for example, to control the movement of the seats, the rear-view mirrors, or the shutters or other members of the air-conditioning system of the vehicle, in dependence on an adjustment level set selectively by the motorist.

In this connection, the microcontroller 30 may include a certain processing capacity so that it can supply the peripheral unit 2 with processed data from a sensor; for example, in the case of a unit 5 associated with a sensor for detecting the level of the fuel in the vehicle's tank, the output signal of which may be subject to fluctuations resulting from the jolting of the fuel in the tank, an averaging operation may be carried out in the microcontroller 30 (according to known criteria) in order to eliminate the effect of momentary fluctuations on the level signal supplied to the main unit 2.

Regarding the configuration of the microcontrollers 20 and 30 at the software level, the following may be noted.

In general, the functions performed by the microcontroller 20 of the main unit 2 are:

- controlling communications in parallel on the lines 3 (sending messages and receiving data concerning the states of the peripheral units, transmitting parity bits and receiving acknowledgment messages),
- controlling the inputs and the outputs connected locally to the main unit 2,
- acknowledging commands received, checking that the commands are correct and consistent with each other, possibly applying priorities, and processing new commands to be sent to the actuators, possibly in dependence on diagnostic signals,
- monitoring the state of the battery to ensure the correct supply to the entire system and deactivating the system 1 in a controlled manner when the voltage falls below predetermined limits,

- filtering the local inputs to the main unit 2 at the software level to eliminate any rebound.

From the system logic point of view, the main unit 2 thus collects data from and sends it to the local devices and the peripheral units as well as processing the data, the state monitoring and the input filtering being carried out simultaneously with the other operations so as to achieve continuous control; at the implementation level, this kind of operation can be achieved by activating the communication and calculation steps during different periods with the periodic activation of the third step so as to simulate a time overlap.

Regarding the microcontrollers 30 of the peripheral units, the main functions organised at the software level are:

- communication with the main unit 2 and the transmission of signals to the other peripheral units (the so-called "becoming transmissive" of a unit which has already communicated with the main unit ),
- the filtering of local inputs (particularly key pads, possibly with the decoding and acknowledgment of commands from one or more key pads) at the software level, and
- the control of the most urgent diagnosis of the actuators, for example, regarding the window-winder circuits (the detection of the end of travel or of obstacles).

Regarding the emission of acknowledgment messages (ACK), the following procedure may be followed.

If the peripheral unit 5, 6 does not acknowledge the parity test as correct, it sends the main unit a negative acknowledgment signal (NACK) and does not transfer the actuation commands it has received. Upon the emission of three consecutive NACK messages, the unit 5, 6 transfers fault values to its outputs and stops all the movements it controls. At the same time, if the peripheral unit does not detect a break in communications, the fault situation is transferred to the actuators after a period of inactivity of two complete communication cycles on the line.

Naturally, the principle of the invention remaining the same, the details of construction and forms of embodiment may be varied widely with respect to those described and illustrated, without thereby departing from the scope of the present invention.

**Claims**

1. A system for transmitting signals particularly between command-signal generating devices, sensor devices and actuator devices fitted in motor vehicles (A), characterised in that it includes:

- a plurality of peripheral interface units (5, 6) each associated with at least one device,

- a main unit (2) which can converse with the peripheral units (5, 6), and

- communication lines (3) which branch out from the central unit (2) towards the peripheral units (5, 6),

and in that the peripheral units (5, 6) are connected to the communication lines (3) in a generally interchangeable manner (as defined above).

2. A system according to Claim 1, characterised in that the communication lines branch out from the main unit (2) in a generally star-like arrangement.

3. A system according to Claim 1 or Claim 2, characterised in that each communication line (3) includes:

- a supply wire,
- a signal-transmission wire, and
- at least one earth wire.

4. A system according to any one of Claims 1 to 3, characterised in that at least some of the peripheral units (5, 6) are interposed between the main unit (2) and at least one other peripheral unit (5, 6) in a respective communication line (3), and in that the at least some peripheral units (5, 6) include means (32) for connection to the respective communication line (3), the means being selectively switchable between a first operative state in which they enable dialogue between the respective peripheral unit (5, 6) and the main unit (2), and a second state, in which the respective peripheral unit (5, 6) is transmissive to signals passing through the respective communication line (3).

5. A system according to any one of the preceding claims, characterised in that the main unit (2) transmits a synchronisation signal to the peripheral units (5, 6) substantially continuously.

6. A system according to Claim 1 or Claim 4, characterised in that each peripheral unit (5, 6) includes timing control means (30, 31) connected to the means (32) for connecting the peripheral unit to the respective communication line (3) in order to activate the respective peripheral unit (5, 6) upon the detection of a signal by the connection means (32).

7. A system according to any one of the preceding claims, characterised in that each communi-

nication line (3) includes a wire for supplying the peripheral units (5, 6) so that the supply to the peripheral units (5, 6) is controlled by the central unit (2).

8. A method of controlling the operation of a system according to Claim 1, characterised in that:

- after dialogue with the main unit (2), each peripheral unit (5, 6) is made transmissive to communications, so as to enable the main unit (2) to converse cyclically with all the peripheral units (5, 6),

- upon completion of its cycle for the interrogation of the peripheral units (5,6), the main unit (2) is disconnected from the system (1) for a given time interval, and

- during the given time interval, the peripheral units (5, 6) are reset to the state in which they can communicate with the central unit (2).

9. A method according to Claim 8, characterised in that it includes the step of deactivating the system (1) to bring it to a state (stopped) in which its energy consumption is low and reactivating the system (1), at least partially, upon the emission of a signal by at least one of the command-signal generating and/or sensor devices.

10. A method of organising the operation of a system according to any one of Claims 1 to 7 having a respective supply (22), characterised in that it includes the step of monitoring (21) the level of the supply, comparing the value detected with a range of acceptable supply values for the operation of the system and deactivating the system (1) when the supply level falls outside the range of acceptable values.

11. A method of organising the operation of a system according to any one of Claims 1 to 7, characterised in that a "token passing" protocol (10 to 13) is used for the dialogue between the central unit (2) and the peripheral units (5, 6).

12. A method of organising the operation of a system according to any one of Claims 1 to 7, characterised in that the protocol used for the communications between the main unit (2) and the peripheral units (5, 6) includes:

- a frame (11) for communications from the peripheral units (5, 6) to the main unit (2), and

- a frame (12) for communications from the main unit (2) to the peripheral units (5, 6).

13. A method according to Claim 12, characterised in that the protocol also includes a frame for the transmission of at least one transmission error-checking symbol from the main unit (2) to the peripheral units (5, 6) and at least one frame for the transmission of a symbol for confirming the correct receipt of the message (ACK) from the peripheral units (5, 6) to the main unit (2).

14. A method according to Claim 13, characterised in that it includes the step of detecting a condition in which a particular peripheral unit (5, 6) has sent the central unit (2) a message (NACK) indicative of a failure to receive the correct message on a predetermined number of occasions and, in these circumstances, generating a fault warning signal.

15. A method according to Claim 14, characterised in that the predetermined number of occasions selected is three.

16. A method according to Claim 14 or Claim 15, characterised in that it includes the steps of deactivating the actuators associated with the peripheral unit (5, 6) in which the fault signal has been generated for at least one interrogation cycle of the central unit (2).

FIG. 1

FIG. 2

# FIG. 3

SL1    SL2    SL3

TIME T₁

10   11   12   13

TIME T₂

10   11   12   13   10   11   12   13

TIME T₃

10   11   12   13   10   11   12   13   10   11   12   13

# FIG. 4

SL1    SL2    SL3

TIME T₁

11   12   13   14   14

TIME T₂

11   12   13   11   12   13   14

TIME T₃

11   12   13   11   12   13   11   12   13

FIG. 5

FIG. 6

FIG. 7